# EUROPÄISCHE PATENTSCHRIFT

(11) **EP 2 927 020 B1**
(45) Veröffentlichungstag und Bekanntmachung des Hinweises auf die Patenterteilung: **12.12.2018**
(21) Anmeldenummer: 15153926.9
(22) Anmeldetag: 05.02.2015
(51) Int. Cl.: B60B 21/02, B60B 3/00, B60B 3/04, B60C 7/00

(54) **Radkörper, insbesondere zur Verwendung als Hohlkörperfelge für hohe Tragfähigkeit, etwa als Bandagenfelge**
Wheel body, in particular for use as a hollow rim for high load bearing capacity, in the form of a bandage rim for example
Corps de roue, en particulier destiné à être utilisé en tant que jante de corps creux pour charge élevée, en tant que jante de bandage

(30) Priorität: 04.04.2014 DE 102014206573
(43) Veröffentlichungstag der Anmeldung: 07.10.2015
(73) Patentinhaber: Jungheinrich Aktiengesellschaft, 22047 Hamburg (DE)
(72) Erfinder: Pelz, Daniel, 85435 Erding (DE); Jeromin, Nikolaus, 85368 Moosburg (DE); Wionzek, Franz, 84032 Landshut (DE)
(74) Vertreter: Weickmann & Weickmann PartmbB

(56) Entgegenhaltungen:
- DE-A1- 2 350 512
- US-A- 4 434 864
- US-A- 5 053 095

## Beschreibung

Die Erfindung betrifft allgemein für schwere Lasten geeignete Räder, ggf. sogenannte "Scheibenräder", für industrielle Anwendungen, wie Materialhandhabungsanlagen, Industrieaufleger, Hebebühnen und Schwerlastfahrzeuge. Es wird speziell an Räder für große Lasten bei vergleichsweise langsamen Geschwindigkeiten gedacht, wie sie etwa für Gabelstapler oder allgemeine Flurförderzeuge, industrielle Anhänger und Walzenzüge benötigt werden. Es wird an Räder gedacht, die mit sogenannten Bandagen-Reifen oder Bandagen ausgestattet sind, die typischerweise aus einem zylindrischen Stahlband mit einer Kunststoff-, Gummi- oder allgemein Elastomerauflage, der eigentlichen "Bandage", bestehen, und auch unter den Begriffen "Press-On Solid (POS)" und "Cushion Tire" bekannt sind. Weist der Bandagen-Reifen das angesprochene zylindrische Stahlband auf, spricht man auch von einer Stahlband-Bandage. Alternativ sind beispielsweise Bandagenreifen ohne Stahlband aus der DE 23 50 512 bekannt, bei welchen die Bereifung direkt auf dem Rad-Körper aufliegt. Bei dieser konkreten Lösung ist die Bereifung konvex, V-förmig ausgeführt, so dass der Rad-Körper zu Aufnahme dieser aus zwei Teilen, einer Radscheibe und einem dieser funktionell zugehörigen Einsatzring, besteht.

Wesentlicher Bestandteil eines mit einem zylindrischen Stahlband versehenen Rads mit einem Bandagen-Reifen ist ein als Felge oder Bandagenfelge ansprechbarer Rad-Körper. Eine Stahlband-Bandage wird auf den Rad-Körper aufgeschoben, so dass die Stahlband-Bandage mit der Innenumfangsfläche des zylindrischen Stahlbands auf einer zylindrischen Tragfläche des Rad-Körpers sitzt. Das Aufschieben oder Aufpressen der Stahlband-Bandage auf die Tragfläche des Rad-Körpers kann zweckmäßig in einem erwärmten Zustand erfolgen, so dass die Stahlband-Bandage nach dem Abkühlen gewissermaßen auf die Tragfläche aufgeschrumpft ist.

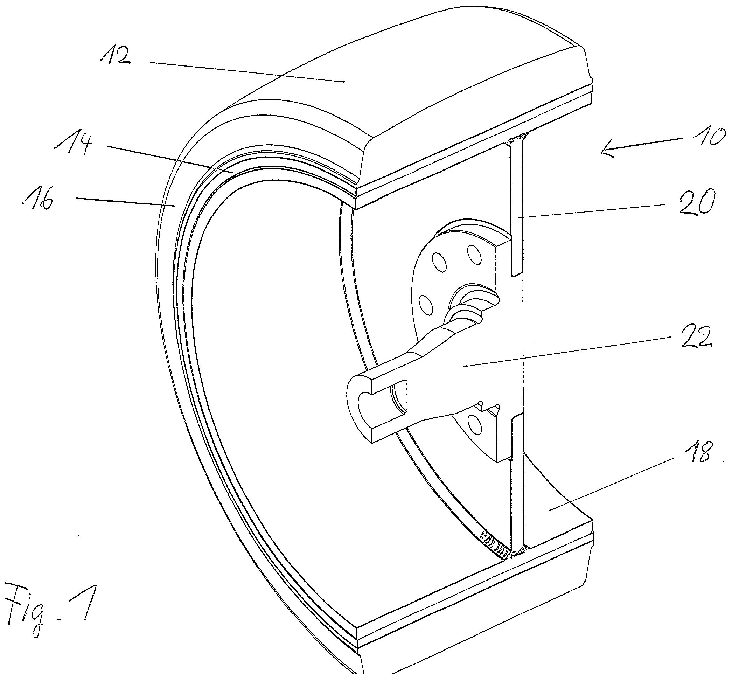

Eine bekannte einfache Konstruktion eines solchen Rad-Körpers (vgl. Fig. 1) ist einfach von einem sich koaxial zu einer Rad-Körper-Achse erstreckenden, radial außen liegenden zylindrischen Ring (Außenring) gebildet, der auf einer radialen Außenseite die Tragfläche zum Tragen des Bandagen-Reifens aufweist. Der Außenring ist mittels eines beispielsweise scheibenringförmigen Tragstegs mit einer Radhalterung verbindbar. Hierzu erstreckt sich der Tragsteg von dem Außenring nach radial innen und ist radial außen mit dem Innenumfang des Außenrings verschweißt. An einem radial inneren Verbindungsbereich, in der Regel einem radial inneren Randbereich des Tragstegs ist dieser typischerweise mit einer Radhalterung der mit dem entsprechenden Rad auszustattenden (ausgestatteten) bewegbaren Vorrichtung, insbesondere Flurförderzeug oder Gabelstapler, verbindbar (verbunden), regelmäßig durch Verschraubung, um das Rad auch auswechseln zu können. Ein Beispiel für einen in diese Richtung gehenden Rad-Körper ist in der US 4,434,864 gezeigt.

Bei solch einer Konstruktion sind Bedenken angebracht, ob der Rad-Körper bei hohen Belastungen eine hinreichende Standfestigkeit hat. So können im Bereich der Schweißnähte zwischen dem Tragsteg und dem Außenring vergleichsweise hohe Spannungen auftreten, die die Gefahr eines Ausfalls der Felge wahrscheinlich machen.

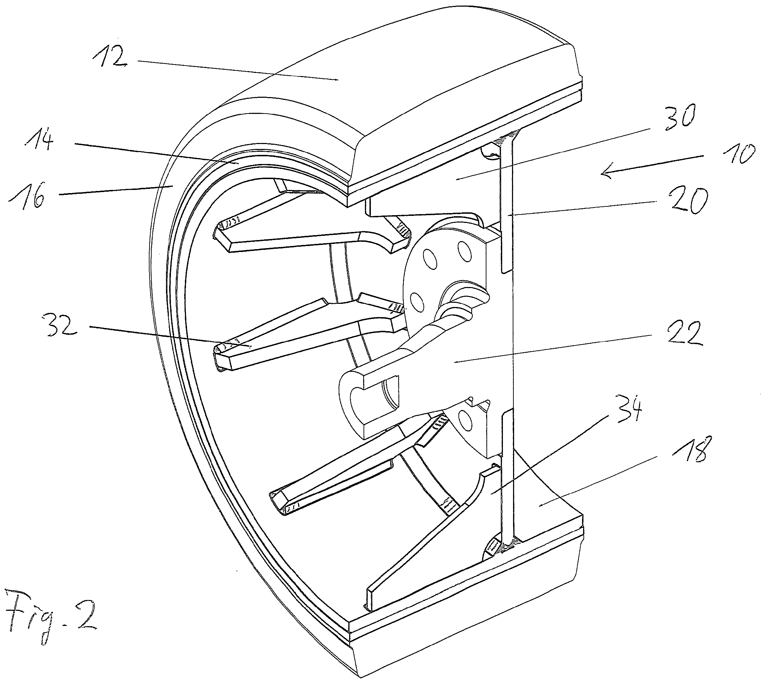

Eine demgegenüber hinsichtlich der zu erwartenden Lebensdauer verbesserte herkömmliche Konstruktion (vgl. Fig. 2) weist eine Stützanordnung auf, die den Außenring mit einer axialen Seite des Tragstegs verbindet und eine Mehrzahl von gesonderten Stützrippen umfasst, die an einem radial außen liegenden, sich axial erstreckenden Schenkel mit dem Innenumfang des Außenrings und einem sich radial erstreckenden Schenkel mit einer axialen Seite des Tragstegs verschweißt sind. Die Stützrippen sind in Umfangsrichtung in gleichmäßigen Abständen verteilt angeordnet. Diese Konstruktion weist aufgrund der Mehrzahl von Stützrippen einen erheblichen Fertigungsaufwand auf. Da die Schweißnähte zwischen dem Tragsteg und der jeweiligen Stützrippe vergleichsweise hoch beansprucht werden, wird auch einen erhebliche Anzahl von derartigen Stützrippen benötigt, um eine wesentliche Verbesserung gegenüber der einfachen bekannten Lösung nur mit dem Außenring und dem Tragsteg zu erreichen. Eine mögliche Anordnung von Stützrippen, die gleichmäßig entlang des Umfangs des Tragstegs angebracht bzw. mit diesem verschweißt sind, ist beispielsweise aus der US 5,053,095 bekannt.

Vor diesem technischen Hintergrund geht die Erfindung von einem Rad-Körper, insbesondere zur Verwendung als Felge für einen Bandagen-Reifen aus, der umfasst: einen sich koaxial zu einer Rad-Körper-Achse erstreckenden zylindrischen Außenringabschnitt, der auf einer radialen Außenseite eine Lauffläche oder eine Tragfläche zum Tragen eines Reifens, beispielsweise eines Bandagen-Reifens, aufweist; einen mit dem Außenringabschnitt verbundenen, sich von dem Außenringabschnitt nach radial innen erstreckenden Tragstegabschnitt, über den der Außenringabschnitt mit einer Radhalterung verbindbar ist; und eine den Außenringabschnitt mit zumindest einer axialen Seite des Tragstegabschnitts verbindende Stützanordnung.

Es ist eine Aufgabe der Erfindung, einen derartigen Rad-Körper bereitzustellen, der eine vergleichsweise hohe Standfestigkeit auch bei großen Belastungen aufweist und trotzdem vergleichsweise kostengünstig herstellbar ist.

Zur Lösung dieser Aufgabe führt für den angesprochenen Rad-Körper erfindungsgemäß vorgeschlagen, dass die Stützanordnung einen sich koaxial zu der Rad-Körper-Achse radial innerhalb des Außenringabschnitt erstreckenden Innenringabschnitt aufweist, der einerseits direkt oder indirekt in radialem Abstand von dem Außenringabschnitt mit dem Tragstegabschnitt verbunden ist und andererseits direkt oder indirekt in axialem Abstand von dem Tragstegabschnitt mit einer radialen Innenseite des Außenringabschnitts verbunden ist.

Ein solcher Innenringabschitt lässt sich vergleichsweise einfach als Teil des Rad-Körpers realisieren, insbesondere wenn der Außenringabschnitt von einem zylindrischen Außenring gebildet ist, wie es bevorzugt ist. Auf in axialer und radialer Richtung sich erstreckende Schweißnähte zum Vorsehen gesonderter Stützrippen kann verzichtet werden. Schweißnähte zum Verbinden gesonderter Bauteile des Rad-Körpers können als homogen in Umfangsrichtung verlaufende Schweißnähte ausgeführt sein, wodurch eine hohe Schweißqualität erreichbar ist, so dass Schweißnahtspannungen kleiner und die zu erwartende Lebensdauer vergrößert ist.

Vorzugsweise umfasst die Stützanordnung einen von dem Tragstegabschnitt axial beabstandeten, mit dem Außenringabschnitt verbundenen und sich von diesem radial innen erstreckenden und mit dem Innenringabschnitt verbundenen Stützringabschnitt. Der Innenringabschnitt kann vorteilhaft zylindrisch ausgebildet sein. Der Innenringabschnitt kann zweckmäßig direkt mit dem Tragstegabschnitt verbunden sein.

Man kann zweckmäßig vorsehen, dass der Außenringabschitt, der Tragstegabschnitt und der Innenringabschnitt oder - vorzugsweise - der Außenringabschitt, der Tragstegabschnitt, der Innenringabschnitt und der Stützringabschnitt einen Ringhohlraum des Rad-Körpers begrenzen. Ist, wie vorgesehen, der Stützringabschnitt vorgesehen, so kann der Ringhohlraum einen rechteckigen oder quadratischen Querschnitt aufweisen, was besonders zweckmäßig ist.

Wie zumindest schon implizit schon angesprochen, wird daran gedacht, dass der Rad-Körper aus mehreren gesonderten Bauteilen, vorzugsweise durch Schweißen miteinander verbundenen Metallbauteilen, insbesondere Stahlteilen, hergestellt ist. Dabei können die gesonderten Metallbauteile wenigstens einen den Außenringabschnitt bildenden Außenring und wenigstens einen den Tragstegabschnitt bildenden Tragsteg umfassen. Ferner können die gesonderten Metallbauteile wenigstens einen den Innenringabschnitt bildenden Innenring und vorzugsweise wenigstens einen den Stützringabschnitt bildenden Stützring umfassen.

Bevorzugt sind die angesprochenen Metallbauteile von geometrisch einfacher Gestalt, nämlich als kreiszylindrische Ringelement, die sich nur in axialer Richtung erstrecken, bzw. als sich nicht nur in radialer Richtung erstreckende Scheibenelemente bzw. Ringscheibenelemente ausgeführt. Solche kreiszylindrischen Ringelemente können durch Ablängen von einem entsprechenden Rohrelement bereitgestellt werden und solche Scheiben- bzw. Ringscheibenelemente können aus geeignetem flächigen Material hergestellt werden, beispielsweise durch Laserschneiden. Es versteht sich, dass die angesprochenen Bauteile aus einem geeigneten Material hergestellt werden, beispielsweise Metall, insbesondere Stahl.

Die Erfindung stellt auch ein Herstellungsverfahren zur Herstellung eines Rad-Körpers aus mehreren Metallbauteilen bereit, wobei vor allem an einen Rad-Körper gedacht wird, der beispielsweise zur Verwendung als Felge für einen Bandagenreifen vorgesehen ist. Ein solcher Rad-Körper umfasst erfindungsgemäß:
- einen sich koaxial zu einer Rad-Körper-Achse erstreckenden zylindrischen Außenringabschnitt, der auf einer radialen Außenseite eine Lauffläche oder eine Tragfläche zum Tragen eines Reifens, insbesondere eines Bandagen-Reifens, aufweist;
- einen mit dem Außenringabschnitt verbundenen, sich von dem Außenringabschnitt nach radial innen erstreckenden Tragstegabschnitt, über den der Außenringabschnitt mit einer Radhalterung verbindbar ist; und
- eine den Außenringabschnitt mit zumindest einer axialen Seite des Tragstegabschnitts verbindende Stützanordnung, welche einen sich koaxial zu der Rad-Körper-Achse radial innerhalb des Außenringabschnitt erstreckenden Innenringabschnitt aufweist, der einerseits direkt oder indirekt in radialem Abstand von dem Außenringabschnitt mit dem Tragstegabschnitt verbunden ist und andererseits direkt oder indirekt in axialem Abstand von dem Tragstegabschnitt mit einer radialen Innenseite des Außenringabschnitts verbunden ist.

Das erfindungsgemäße Herstellungsverfahren zeichnet sich durch die folgenden Verfahrensschritte aus:
a) Bereitstellen eines im fertigen Rad-Körper den Außenringabschnitt bildenden Außenrings;
b) Bereitstellen einer den Tragstegabschnitt und den Innenringabschnitt aufweisenden Schweißbaugruppe;
c) Einschieben der Schweißbaugruppe in den Außenring; und
d) Verschweißen der Schweißbaugruppe an ihrem äußeren Umfang mit einer radialen Innenseite des Außenrings.

Durch Verwendung der Schweißbaugruppe wird das Zusammenfügen des Rad-Körpers aus den diesen bildenden Metallbauteilen wesentlich vereinfacht. Das Einschieben der Schweißbaugruppe in den Außenring kann ein Einpressen umfassen, wofür die Schweißbaugruppe an ihrem Außenumfang entsprechend passgenau vorbereitet werden kann, so dass einen nötige Zentrierungsfunktion gegebenenfalls zwangsläufig mit erreicht wird.

Es wird vor allem daran gedacht, dass die Schweißbaugruppe an wenigstens einem Abschnitt ihres äußeren Umfangs mit der radialen Innenseite des Außenring verschweißt wird, wodurch zumindest der Tragstegabschnitt mit dem Außenring verbunden wird.

Ferner wird daran gedacht, dass die Schweißbaugruppe einen von dem Tragstegabschnitt axial beabstandeten Stützringabschnitt aufweist, der sich von dem Innenringabschnitt nach radial außen erstreckt und mit der radialen Innenseite des Außenring verschweißt wird.

Auch die Schweißbaugruppe kann durch Verschweißen aus mehreren Metallbauteilen hergestellt werden. Es wird in diesem Zusammenhang daran gedacht, dass die Metallbauteile wenigstens einen den Tragstegabschnitt bildenden Tragsteg umfassen und die wenigstens einen den Innenringabschnitt bildenden Innenring oder/und wenigstens einen den Stützringabschnitt bildenden Stützring umfassen. Es ist aber nicht ausgeschlossen, dass noch wenigstens ein weiteres Metallbauteil, gegebenenfalls mehrere weitere Metallbauteile vorgesehen sind, die zusammen mit den angesprochenen Metallbauteilen die Schweißbaugruppe bilden.

Eine bevorzugte Ausgestaltung des Verfahrens zeichnet sich dadurch aus, dass die zum Herstellen der Schweißbaugruppe miteinander zu verschweißenden Metallbauteile in ihre relativen Sollpositionen gebracht und aneinander fixiert werden und dann verschweißt werden. Die Fixierung kann durch punktförmige Verbindung mittels Schweißpunkten erfolgen (sogenanntes Heften). Der Außenring kann dabei vorteilhaft als Positionierungs- oder Fixierungs-Hilfseinrichtung (ggf. sogenannte Heftvorrichtung) verwendet werden.

Die Erfindung stellt speziell auch einen Rad-Körper der angesprochenen Ausgestaltung bereit, der mit den erfindungsgemäß Verfahren hergestellt ist. Die Erfindung stellt ferner ein Laufrad für ein Flurförderzeug, ein gewerbliches Fahrzeug oder eine vermittels wenigstens eines Laufrads bewegliche Vorrichtung bereit, umfassend einen erfindungsgemäßen Rad-Körper. Vorzugsweise ist das Laufrad mit einem Bandagen-Reifen auf der Tragfläche ausgestattet.

Die Erfindung stellt ferner eine bewegliche Vorrichtung, beispielsweise ein Flurförderzeug oder allgemein ein gewerbliches Fahrzeug, bereit, welche/welches mittels wenigstens eines erfindungsgemäßen Laufrads beweglich ist.

Die Erfindung wird im Folgenden anhand von Figuren dargestellten Ausführungsbeispielen näher erläutert.
- Figur 1: zeigt eine erste herkömmliche Ausführungsform eines Rad-Körpers, der als Felge für einen Bandagen-Reifen dient.
- Figur 2: zeigt eine zweite herkömmliche Ausführungsform eines Rad-Körpers, der als Felge für einen Bandagen-Reifen dient.

- Figur 3: zeigt ein erstes Ausführungsbeispiel für einen erfindungsgemäßen Rad-Körper, der als Felge für einen Bandagen-Reifen dient.
- Figur 4: zeigt ein zweites Ausführungsbeispiel für einen erfindungsgemäßen Rad-Körper, der als Felge für einen Bandagen-Reifen dient.
- Figur 5: zeigt ein drittes Ausführungsbeispiel für einen erfindungsgemäßen Rad-Körper, der als Felge für einen Bandagen-Reifen dient.
- Figur 6: zeigt ein viertes Ausführungsbeispiel für einen erfindungsgemäßen Rad-Körper, der als Felge für einen Bandagen-Reifen dient.

Figur 1 zeigt eine bekannte Ausführungsform eines herkömmlichen Rad-Körpers 10, der als Felge für eine Stahlband-Bandage 12 dient. Die Stahlband-Bandage umfasst ein zylindrisches Stahlband 14, welches auf einer radialen Außenseite die eigentliche Bandage 16 aus einem Elastomermaterial, beispielsweise Gummimaterial (insbesondere Hartgummi) oder einem geeigneten Kunststoff trägt. Die Stahlband-Bandage 12 sitzt mit einem Innenumfang des Stahlbands 14 auf einer Tragfläche des Rad-Körpers 10, die vom Außenumfang eines Ringelements 18 des Rad-Körpers 10 gebildet ist. Dieses Ringelement kann auch als Außenring 18 bezeichnet werden und ist kreiszylindrisch ausgeführt. Der Außenring 18 ist durch ein Scheibenelement, vorliegenden einem Ringscheibenelement 20, relativ zu einem Radflansch 22 einer Radhalterung gehalten. Das Ringscheibenelement 20 kann auch als Tragsteg 20 bezeichnet werden.

Der Tragsteg 20 ist durch zwei umlaufende Schweißnähte mit dem Innenumfang des Außenring 18 verschweißt, auf beiden axialen Seiten des Tragstegs 20. Im Bereich dieser Schweißnähte können vergleichsweise hohe Spannungen auftreten, wodurch die Standfestigkeit bzw. Tragfähigkeit der vom Rad-Körper 10 gebildeten Bandagenfelge gefährdet wird.

Eine weitere bekannte Konstruktion ist in Figur 2 gezeigt. Diese Konstruktion unterscheidet sich von der Konstruktion gemäß Figur 1 durch zusätzliche, grob dreieckige Stützrippen 30, die an einem sich in axialer Richtung erstreckenden Schenkel 32 durch zwei Schweißnähte mit dem Innenumfang des Außenrings 18 verschweißt sind und an einem sich radial erstreckenden Schenkel 34 mit einer axialen Seite des Tragstegs 20 verschweißt sind, ebenfalls durch zwei Schweißnähte. Die jeweiligen beiden Schweißnähte sind auf in Umfangsrichtung entgegengesetzten Seiten der Stützrippen ausgeführt.

Der Fertigungsaufwand für das Vorsehen der Stützrippen ist erheblich, und es werden auch die Schweißnähte zwischen den Stützrippen und den Tragrippen relativ hoch beansprucht, so dass eine hinreichende Anzahl von Stützrippen benötigt wird, um gegenüber der Lösung von Figur 1 eine wesentliche Verbesserung hinsichtlich der Belastbarkeit bzw. Dauerbeanspruchbarkeit zu erreichen.

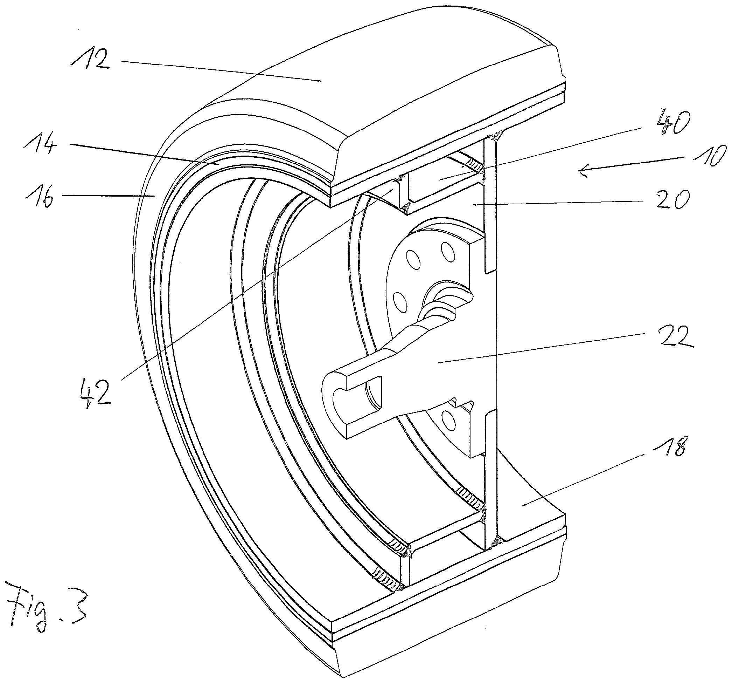

Die in den Figuren 3 bis 6 als Ausführungsbeispiele gezeigten erfindungsgemäßen Lösungen sind mit deutlich geringerem Herstellungsaufwand zu fertigen und zeichnen sich durch ein gute Belastbarkeit und Dauerstandfestigkeit aus. Es werden für die erfindungsgemäßen Lösungen die gleichen Bezugszeichen wie für die bekannten Lösungen gemäß den Figuren 1 und 2 verwendet.

Anstelle der von den Stützrippen 32 gebildeten Stützanordnung weist die erfindungsgemäße Konstruktion gemäß Figur 3 eine Stützanordnung auf, die von einem in radialem Abstand vom Außenring 18 angeordneten Innenring 40 und eine in radialem Abstand von dem den Tragsteg 20 bildenden Scheibenelement (vorliegend Ringscheibenelement) angeordneten Stützring 42 gebildet ist. Der Stützring 42 ist als Ringscheibenelement ausgeführt und verbindet den als kreiszylindrisches Ringelement ausgeführten Innenring 40 mit dem Innenumfang des Außenrings 18. Der Innenring 40 ist an einem axialen Endabschnitt durch zwei in Umfangsrichtung umlaufende Schweißnähte mit einer axialen Seite des Tragstegs 20 verbunden und an seinem anderen axialen Endbereich durch eine umlaufende Schweißnaht mit dem Stützring 42 verbunden, der seinerseits radial außen durch eine umlaufende Schweißnaht mit dem Innenumfang des Außenrings verbunden ist. Die Anordnung aus dem Tragsteg 20, dem Innenring 40 und dem Stützring 42 ist durch insgesamt 2 umlaufende Schweißnähte auf beiden axialen Seiten dieser Anordnung mit dem Innenumfang des Außenrings 18 verbunden.

Die Herstellung des erfindungsgemäßen Rad-Körpers gemäß Figur 3 kann zweckmäßig wie folgt erfolgen. Es wird zuerst eine Schweißbaugruppe umfassend den Tragsteg 20, den damit verschweißten Innenring 40 und dem damit verschweißten Stützring 42 hergestellt und - wenn erforderlich - am Außenumfang, nämlich den radial äußeren Umfängen des Ringscheibenelements 20 und des Stützrings 42, für eine Verschweißung mit dem Außenring 18 vorbereitet. Die so gebildete Schweißbaugruppe wird dann in den Außenring 18 eingeschoben oder eingepresst und anschließend von beiden axialen Seiten her radial außen mit dem Innenumfang des Außenrings 18 verschweißt, nämlich einerseits am Außenumfang des Tragstegs 20 und andererseits am Außenumfang des Stützrings 42.

Die angesprochenen Komponenten, nämlich der Außenring 18, der Tragsteg 20, der Innenring 40 und der Stützring 42 begrenzen eine beim vorliegenden Ausführungsbeispiel einen einen rechteckigen Querschnitt aufweisenden Ringhohlraum des Rad-Körpers 10.

Der zusätzliche Stützring 42 leitet einen Teil der Radaufstandskraft über den Innenring 40 in den Tragsteg 20 ein, wodurch wird eine wesentlich stabilere Konstruktion erreicht wird. Die Schweißnahtspannung ist kleiner und damit ist die zu erwartende Lebensdauer vergrößert. Der Herstellungsaufwand ist im Vergleich zur bekannten Lösung gemäß Fig. 2 wesentlich geringer. So können einen jeweiligen Innenring 40 bildende Ringelemente durch Ablängen eines Rohrs geeigneten Durchmessers bereitgestellt werden, so wie dies auch für Ringelemente größeren Durchmessers der Fall ist, die als Außenring 18 verwendet werden können. Auch lassen sich die benötigten umlaufenden Schweißnähte mit weniger Arbeitsgängen als die axialen und radialen Schweißnähte der Konstruktion gemäß Figur 2 herstellen, und die Schweißnahtqualität ist bei homogen umlaufenden Schweißnähten auch größer als bei einzelnen Schweißnähten wie bei der Konstruktion in Figur 2.

Ein wichtiger Aspekt der Konstruktion gemäß Figur 3 und der angesprochenen Herstellungsweise ist, dass die hoch belastete Verschweißung zwischen den Innenring 40 und dem Tragsteg 20 beidseitig durch zwei umlaufende Schweißnähte erfolgen kann. Die Schweißnaht zwischen dem Innenring 40 und dem Stützring 42 kann vorteilhaft gegengeschweißt werden.

Wie bei den Lösungen des Stands der Technik verbindet der Tragsteg 20 den Außenring 18 mit dem Radflansch 22, der typischerweise ein Komponente des mit dem Rad auszustattenden Fahrzeug bzw. der mit dem Rad auszustattenden Vorrichtung ist und drehbar gelagert und gegebenenfalls antreibbar ist. Es kann sich beispielsweise um eine einer Achse zugehörige Komponente handeln.

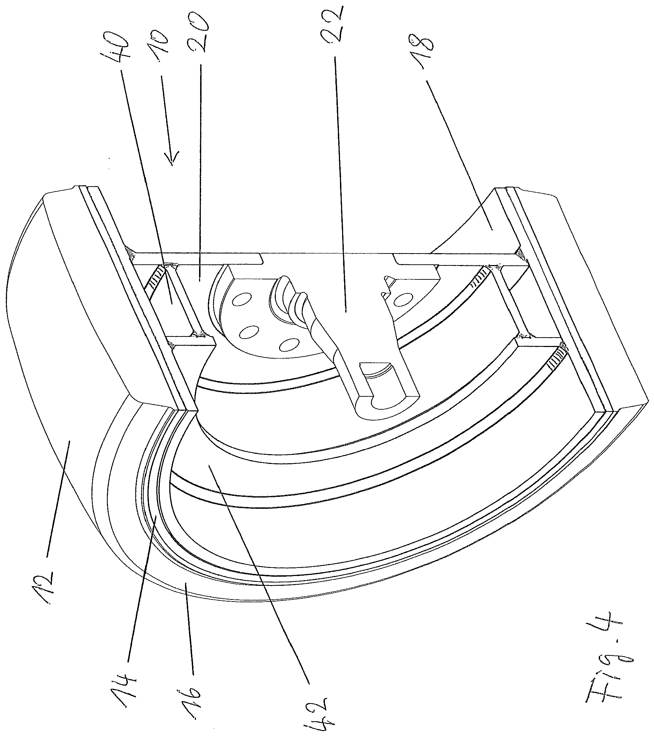

Bei der erfindungsgemäßen Lösung von Figur 3 erfüllt der Stützring 42 eine Zentrierungsfunktion für den Innenring 40 und muss deswegen nicht nur an seinem Außenumfang, sondern auch an seinem Innenumfang exakt für die Verschweißung und überdies die Zentrierungsfunktion vorbereitet werden. Einen demgegenüber vereinfachte Lösung ist das Ausführungsbeispiel der Figur 4. Hier erstreckt sich der Stützring 42 etwas weiter nach radial innen, und der Innenring 40 ist an seinen beiden axialen Umfangsrändern jeweils beidseitig verschweißt, einerseits mit einer axialen Seiten des Tragstegs 20 wie bei Figur 3 und andererseits mit einer axialen Seite des Stützrings 42, auf analoge Weise durch eine radial innere und eine radial äußere, in Umfangsrichtung umlaufende Schweißnaht.

Wie beim Ausführungsbeispiel der Figur 3 kann die Herstellung des Rad-Körpers 10 nach Figur 4 zweckmäßig durch Herstellung zuerst einer Schweißbaugruppe erfolgen, die von dem Tragsteg 20, dem Innenring 40 und dem Stützring 42 gebildet ist, die durch die dargestellten Schweißnähte miteinander verschweist sind. Diese Schweißbaugruppe wird dann in den Außenring 18 eingeschoben oder eingepresst und von beiden axialen Seiten her durch eine jeweilige umlaufenden Schweißnaht mit dem Innenumfang des Außenrings 18 verschweißt.

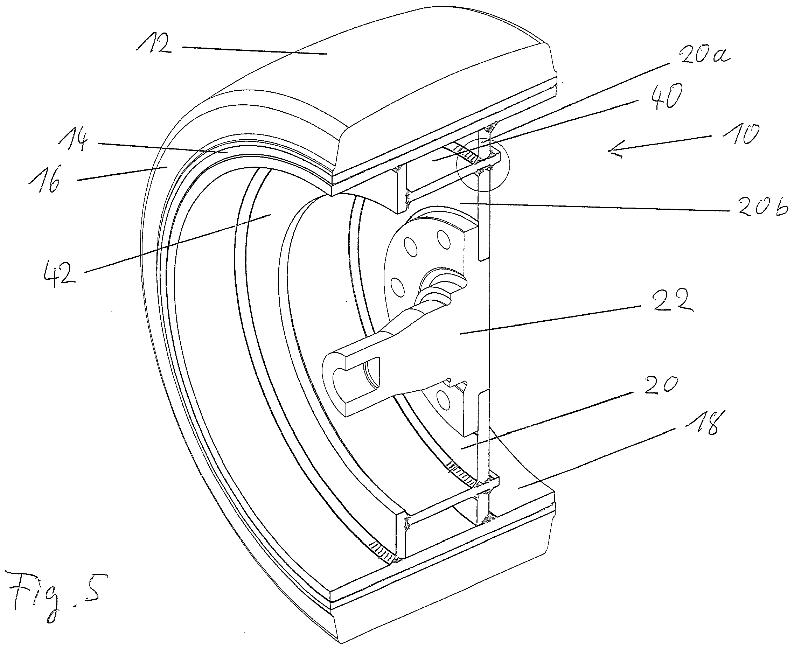

Es ist allgemein darauf hinzuweisen, dass die angesprochenen Komponenten eines Rad-Körpers, die nach den erläuterten Ausführungsbeispielen miteinander durch in Umfangsrichtung umlaufende Schweißnähte miteinander verschweißt werden, jeweils auch mehrteilig ausgeführt sein können, beispielsweise durch miteinander verschweißte Teilkomponenten. Ein Beispiel hierfür ist in Figur 5 gegeben. Dieses Beispiel entspricht hinsichtlich dem Außenring 18 und dem Stützring 42 im Wesentlichen dem Ausführungsbeispiel der Figur 4. Der Innenring 40 erstreckt sich aber etwas weiter in axialer Richtung weg von dem Stützring 42, zwischen einen radial äußeres Ringelement 20a und ein radial inneres Ringelement 20b, mit denen der Innenring auf beiden axialen Seiten, jeweils auf der radial äußeren als auch auf der radial inneren Seite, verschweißt ist, durch insgesamt vier umlaufende Schweißnähte. Die Ringelemente 20a und 20b bilden unter Vermittlung des Innenrings 40 und der genannten Verschweißung einen Tragsteg 20, der in seiner Funktion den Tragsteg 20 von Figur 4 entspricht.

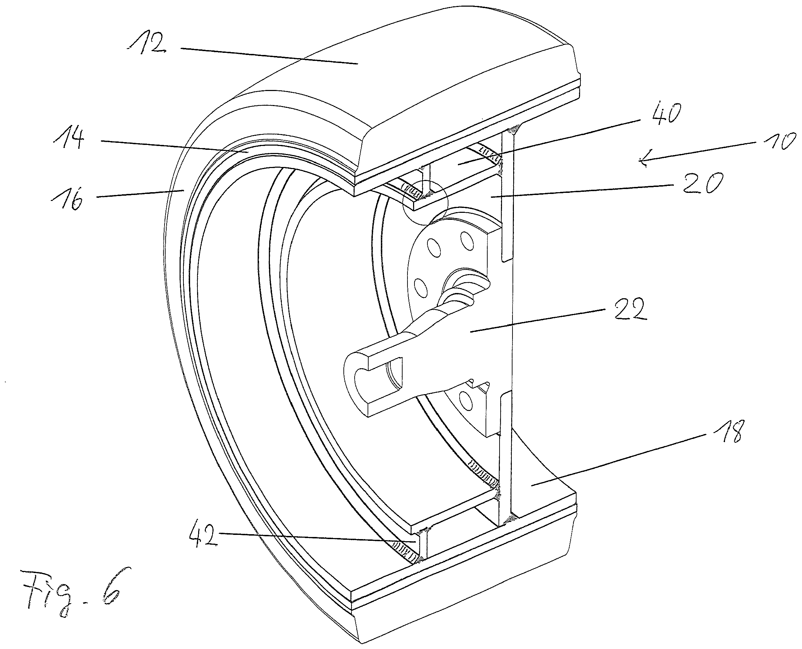

Ein weiteres Ausführungsbeispiel ist in Figur 6 gezeigt das als Ausführungsvariante der Lösung gemäß Figur 3 anzusehen ist. Bei der Konstruktion gemäß Figur 6 erstreckt sich der Innenring 40 axial etwas über die Position des Stützrings 42 hinaus, so dass dieser an seinem Innenumfang mit dem Außenumfang des Innenrings 40 verschweißt ist, vorzugsweise durch zwei umlaufende Schweißnähte auf beiden axialen Seiten des Stützrings 42. Es ist wie bei der Lösung gemäß Figur 3 eine exakte Vorbereitung des Innenumfangs des Stützrings 42 nötig, so dass die Vorteile der Lösung von Figur 4 nicht erreicht werden.

Ein besonders vorteilhafter Fertigungsablauf zeichnet sich durch folgende Handhabungs- und Fertigungsfolge aus: Als erstes werden der Tragsteg 20, der Innenring 40 und der Stützring 42 zur Bildung des Schweißbaugruppe relativ zueinander positioniert, also in ihre relativen Sollpositionen gebracht und aneinander fixiert, beispielsweise durch sogenanntes Heften, also der Herstellung von punktförmigen Verbindungen durch einzelne Schweißpunkte. Der Außenring wird dabei bevorzugt als Positionierungs-Hilfsmittel (Positionierungslehre) oder sogenannte Heftvorrichtung verwendet.

Bei der aus dem Außenring herausgenommenen Schweißbaugruppe werden dann die innen liegenden Kehlnähte geschweißt.

Anschließend wird die Schweißbaugruppe im Außenring positioniert und fixiert, insbesondere durch Punktschweißen geheftet, worauf dann der Tragsteg und der Stützring radial außen mit den umlaufenden Schweißnähten mit dem Innenumfang des Außenrings verschweißt werden.

Typischerweise schließt sich hiernach eine spanende Nachbearbeitung der Anschraubflächen und Zentrierung sowie ein Bohren von Schraubenbohrungen für die Verbindung mit dem Radflansch an. Anschließend kann der Rad-Körper für Lackierung vorbereitet, insbesondere grundiert werden, und dann lackiert werden.

Durch das Einlegen der die Schweißbaugruppe bildenden Komponenten in den als Heftvorrichtung dienenden Außenring kann in der Regel auf eine spanende Bearbeitung des Außendurchmessers des Tragstegs 20 und des

### Stützrings 42 verzichtet werden.

Weitere geeignete Ausführungsformen wird der Fachmann ohne weiteres auffinden können. Dem Fachmann wird aus dem hierin gegebenen Informationen auch klar sein, wie die Einzelkomponenten für die Verschweißung miteinander zweckmäßig vorbereitet werden können.

## Patentansprüche

1. Rad-Körper (10), insbesondere zur Verwendung als Felge (10) für einen Bandagen-Reifen, umfassend:
- einen sich koaxial zu einer Rad-Körper-Achse erstreckenden zylindrischen Außenringabschnitt (18), der auf einer radialen Außenseite eine Lauffläche oder eine Tragfläche zum Tragen eines Reifens, insbesondere eines Bandagen-Reifens (12), aufweist;
- einen mit dem Außenringabschnitt (18) verbundenen, sich von dem Außenringabschnitt nach radial innen erstreckenden Tragstegabschnitt (20), über den der Außenringabschnitt mit einer Radhalterung (22) verbindbar ist; und
- eine den Außenringabschnitt (18) mit zumindest einer axialen Seite des Tragstegabschnitts (20) verbindende Stützanordnung (40, 42);
**dadurch gekennzeichnet, dass** die Stützanordnung (40, 42) einen sich koaxial zu der Rad-Körper-Achse radial innerhalb des Außenringabschnitt (18) erstreckenden Innenringabschnitt (40) aufweist, der einerseits direkt oder indirekt in radialem Abstand von dem Außenringabschnitt (18) mit dem Tragstegabschnitt (20) verbunden ist und andererseits direkt oder indirekt in axialem Abstand von dem Tragstegabschnitt (20) mit einer radialen Innenseite des Außenringabschnitts (18) verbunden ist.

2. Rad-Körper nach Anspruch 1, **dadurch gekennzeichnet, dass** die Stützanordnung (40, 42) einen von dem Tragstegabschnitt (20) axial beabstandeten, mit dem Außenringabschnitt (18) verbundenen und sich von diesem nach radial innen erstreckenden und mit dem Innenringabschnitt (40) verbundenen Stützringabschnitt (42) aufweist, wobei der Innenringabschnitt (40) vorzugsweise zylindrisch ausgeführt ist.

3. Rad-Körper nach Anspruch 1 oder 2, **dadurch gekennzeichnet, dass** der Innenringabschnitt (40) direkt mit dem Tragstegabschnitt (20) verbunden ist.

4. Rad-Körper nach einem der Ansprüche 1 bis 3, **dadurch gekennzeichnet, dass** der Außenringabschnitt (18), der Tragstegabschnitt (20) und der Innenringabschnitt (40) oder der Außenringabschnitt (18), der Tragstegabschnitt (20), der Innenringabschnitt (40) und der Stützringabschnitt (42) einen Ringhohlraum des Rad-Körpers (10) begrenzen.

5. Rad-Körper nach einem der Ansprüche 1 bis 4, **dadurch gekennzeichnet, dass** der Rad-Körper aus mehreren gesonderten Bauteilen, vorzugsweise durch Schweißen miteinander verbundenen Metallbauteilen, insbesondere Stahlteilen (18, 20, 40, 42; 18, 20a, 20b, 40 , 42), hergestellt ist, wobei die gesonderten Metallbauteile vorzugsweise wenigstens einen den Außenringabschnitt bildenden Außenring (18) und wenigstens einen den Tragstegabschnitt bildenden Tragsteg (20; 20a, 20b) umfassen.

6. Rad-Körper nach Anspruch 5, **dadurch gekennzeichnet, dass** die gesonderten Metallbauteile wenigstens einen den Innenringabschnitt bildenden Innenring (40) und vorzugsweise wenigstens einen den Stützringabschnitt bildenden Stützring (42) umfassen.

7. Herstellungsverfahren zur Herstellung eines Rad-Körpers aus mehreren Metallbauteilen (18, 20, 40, 42; 18, 20a, 20b, 40 ,42), wobei der beispielsweise zur Verwendung als Felge für einen Bandagen-Reifen vorgesehene Rad-Körper (10) umfasst:
- einen sich koaxial zu einer Rad-Körper-Achse erstreckenden zylindrischen Außenringabschnitt (18), der auf einer radialen Außenseite eine Lauffläche oder eine Tragfläche zum Tragen eines Reifens, insbesondere eines Bandagen-Reifens (12), aufweist;
- einen mit dem Außenringabschnitt (18) verbundenen, sich von dem Außenringabschnitt nach radial innen erstreckenden Tragstegabschnitt (20), über den der Außenringabschnitt mit einer Radhalterung (22) verbindbar ist;
- eine den Außenringabschnitt (18) mit zumindest einer axialen Seite des Tragstegabschnitts (20) verbindende Stützanordnung (40, 42), welche einen sich koaxial zu der Rad-Körper-Achse radial innerhalb des Außenringabschnitt (18) erstreckenden Innenringabschnitt (40) aufweist, der einerseits direkt oder indirekt in radialem Abstand von dem Außenringabschnitt (18) mit dem Tragstegabschnitt (20) verbunden ist und andererseits direkt oder indirekt in axialem Abstand von dem Tragstegabschnitt (20) mit einer radialen Innenseite des Außenringabschnitts (18) verbunden ist;
wobei das Herstellungsverfahren durch die folgenden Verfahrensschritte gekennzeichnet ist:
a) Bereitstellen eines im fertigen Rad-Körper den Außenringabschnitt bildenden Außenrings (18)
b) Bereitstellen einer den Tragstegabschnitt (20) und den Innenringabschnitt (40) aufweisenden Schweißbaugruppe (20, 40, 42; 20a, 20b, 40 ,42);
c) Einschieben der Schweißbaugruppe in den Außenring; und
d) Verschweißen der Schweißbaugruppe an ihrem äußeren Umfang mit einer radialen Innenseite des Außenrings (18).

8. Verfahren nach Anspruch 7, **dadurch gekennzeichnet, dass** die Schweißbaugruppe (20, 40, 42; 20a, 20b, 40 ,42) an wenigstens einem Abschnitt ihres äußeren Umfangs mit der radialen Innenseite des Außenring (18) verschweißt wird, wodurch zumindest der Tragstegabschnitt (20) mit dem Außenring (18) verbunden wird.

9. Verfahren nach Anspruch 8 oder 9, **dadurch gekennzeichnet, dass** die Schweißbaugruppe (20, 40, 42; 20a, 20b, 40 ,42) einen von dem Tragstegabschnitt (20) axial beabstandeten Stützringabschnitt (42) aufweist, der sich von dem Innenringabschnitt (40) nach radial außen erstreckt und mit der radialen Innenseite des Außenring (18) verschweißt wird.

10. Verfahren nach einem der Ansprüche 7 bis 9, **dadurch gekennzeichnet, dass** die Schweißbaugruppe durch Verschweißen aus mehreren Metallbauteilen hergestellt wird, die wenigstens einen den Tragstegabschnitt bildenden Tragsteg (20; 20a, 20b) umfassen und die wenigstens einen den Innenringabschnitt bildenden Innenring (40) oder/und wenigstens einen den Stützringabschnitt bildenden Stützring (42) umfassen.

11. Verfahren nach Anspruch 10, **dadurch gekennzeichnet, dass** die zum Herstellen der Schweißbaugruppe miteinander zu verschweißenden Metallbauteile (20, 40, 42; 20a, 20b, 40 ,42) in ihre relativen Sollpositionen gebracht und aneinander fixiert werden und dann verschweißt werden, wobei die Fixierung vorzugsweise durch punktförmige Verbindung mittels Schweißpunkten erfolgt.

12. Verfahren nach Anspruch 11, **dadurch gekennzeichnet, dass** der Außenring (18) als Positionierungs- oder Fixierungs-Hilfseinrichtung verwendet wird.

13. Rad-Körper (10) nach einem der Ansprüche 1 bis 6, hergestellt mit dem Verfahren nach einem der Ansprüche 7 bis 12.

14. Laufrad für ein Flurförderzeug, ein gewerbliches Fahrzeug oder eine vermittels wenigstens eines Laufrads bewegliche Vorrichtung, umfassend einen Rad-Körper (10) nach einem der Ansprüche 1 bis 6 und 13, wobei das Laufrad vorzugsweise mit einem Bandagen-Reifen (12) auf der Tragfläche ausgestattet ist.

15. Bewegliche Vorrichtung mit einem Laufrad nach Anspruch 14, beispielsweise ein Flurförderzeug oder allgemein ein gewerbliches Fahrzeug.

## Claims

1. Wheel body (10), in particular for use as a rim (10) for a band tyre, comprising:
- a cylindrical external ring portion (18) that extends coaxially with a wheel-body axis and comprises, on a radial outer face, a bearing surface or a support surface for supporting a tyre, in particular a band tyre (12);
- a support web portion (20) that is connected to the external ring portion (18) and extends radially inwards from the external ring portion, and by means of which the external ring portion can be connected to a wheel mount (22); and
- a support assembly (40, 42) that connects the external ring portion (18) to at least one axial face of the support web portion (20);
**characterised in that** the support assembly (40, 42) comprises an internal ring portion (40) that extends radially within the external ring portion (18) so as to be coaxial with the wheel-body axis, and is directly or indirectly connected to the support web portion (20) so as to be radially spaced from the external ring portion (18), and directly or indirectly connected to a radial inner face of the external ring portion (18) so as to be axially spaced from the support web portion (20).

2. Wheel body according to claim 1, **characterised in that** the support assembly (40, 42) comprises a support ring portion (42) that is axially spaced from the support web portion (20), is connected to the external ring portion (18), extends radially inwards from said external ring portion and is connected to the internal ring portion (40), the internal ring portion (40) preferably being cylindrical.

3. Wheel body according to either claim 1 or claim 2, **characterised in that** the internal ring portion (40) is directly connected to the support web portion (20).

4. Wheel body according to any of claims 1 to 3, **characterised in that** the external ring portion (18), the support web portion (20) and the internal ring portion (40), or the external ring portion (18), the support web portion (20), the internal ring portion (40) and the support ring portion (42) delimit a hollow annular space of the wheel body (10).

5. Wheel body according to any of claims 1 to 4, **characterised in that** the wheel body is produced from a plurality of separate components, preferably metal components that are interconnected by means of welding, in particular steel parts (18, 20, 40, 42; 18, 20a, 20b, 40, 42), the separate metal components preferably including at least one external ring (18) that forms the external ring portion, and at least one support web (20; 20a, 20b) that forms the support web portion.

6. Wheel body according to claim 5, **characterised in that** the separate metal components include at least one internal ring (40) that forms the internal ring portion, and preferably at least one support ring (42) that forms the support ring portion.

7. Method for producing a wheel body from a plurality of metal components (18, 20, 40, 42; 18, 20a, 20b, 40, 42), wherein the wheel body (10) provided for example for use as a rim for a band tyre comprises:
- a cylindrical external ring portion (18) that extends coaxially with a wheel-body axis and comprises, on a radial outer face, a bearing surface or a support surface for supporting a tyre, in particular a band tyre (12);
- a support web portion (20) that is connected to the external ring portion (18) and extends radially inwards from the external ring portion, and by means of which the external ring portion can be connected to a wheel mount (22); and
- a support assembly (40, 42) that connects the external ring portion (18) to at least one axial face of the support web portion (20) and comprises an internal ring portion (40) that extends radially within the external ring portion (18) so as to be coaxial with the wheel-body axis, and is directly or indirectly connected to the support web portion (20) so as to be radially spaced from the external ring portion (18), and directly or indirectly connected to a radial inner face of the external ring portion (18) so as to be axially spaced from the support web portion (20);
wherein the method is **characterised by** the following method steps:
a) providing an external ring (18) that forms the external ring portion in the finished wheel body;
b) providing a welded module (20, 40, 42; 20a, 20b, 40, 42) that comprises the support web portion (20) and the internal ring portion (40);
c) inserting the welded module into the external ring; and
d) welding the welded module, at the external periphery thereof, to a radial inner face of the external ring (18).

8. Method according to claim 7, **characterised in that** the welded module (20, 40, 42; 20a, 20b, 40, 42) is welded, at at least one portion of the external periphery thereof, to the radial inner face of the external ring (18), as a result of which at least the support web portion (20) is connected to the external ring (18).

9. Method according to either claim 8 or claim 9, **characterised in that** the welded module (20, 40, 42; 20a, 20b, 40, 42) comprises a support ring portion (42) that is axially spaced from the support web portion (20), extends radially outwards from the internal ring portion (40) and is welded to the radial inner face of the external ring (18).

10. Method according to any of claims 7 to 9, **characterised in that** the welded module is produced by means of welding from a plurality of metal components, which include at least one support web (20; 20a, 20b) that forms the support web portion, and includes at least one internal ring (40) that forms the internal ring portion and at least one support ring (42) that forms the support ring portion.

11. Method according to claim 10, **characterised in that** the metal components (20, 40, 42; 20a, 20b, 40, 42) that are to be welded to one another so as to produce the welded module are brought into their respective target positions, fixed to one another and then welded, the fixing preferably being achieved by means of punctiform connection using tack welds.

12. Method according to claim 11, **characterised in that** the external ring (18) is used as an auxiliary device for positioning or fixing.

13. Wheel body (10) according to any of claims 1 to 6, produced by means of the method according to any of claims 7 to 12.

14. Wheel for an industrial truck, for a commercial vehicle or for a device that can move by means of at least one wheel, comprising a wheel body (10) according to any of claims 1 to 6 and 13, wherein the wheel is preferably equipped with a band tyre (12) on the support surface.

15. Movable device comprising a wheel according to claim 14, for example an industrial truck or a commercial vehicle in general.

## Revendications

1. Corps de roue (10), plus particulièrement pour l'utilisation comme jante (10) pour un pneu à bandage, comprenant :
- une section de bague externe cylindrique (18), s'étendant de façon coaxiale à un axe de corps de roue, qui présente sur un côté externe radial, une surface de roulement ou une surface porteuse pour porter un pneu, plus particulièrement un pneu à bandage (12) ;
- une section formant entretoise porteuse (20) reliée à la section de bague externe (18), s'étendant de la section de bague externe vers l'intérieur radialement, par laquelle la section de bague externe peut être reliée à une fixation de roue (22) ; et
- un dispositif de support (40, 42) reliant la section de bague externe (18) avec au moins un côté axial de la section formant entretoise porteuse (20) ;
**caractérisée en ce que** le dispositif de support(40, 42) présente une section de bague interne (40) s'étendant de façon coaxiale à l'axe de corps de roue radialement à l'intérieur de la section de bague externe (18), qui est reliée, d'une part, directement ou indirectement à distance radiale de la section de bague externe (18) à la section formant entretoise porteuse (20) et, d'autre part, directement ou indirectement à distance axiale de la section formant entretoise porteuse (20) à un côté interne radial de la section de bague externe (18).

2. Corps de roue selon la revendication 1, **caractérisé en ce que** le dispositif de support (40, 42) présente une section de bague de support (42) reliée à la section de bague externe (18) et s'étendant de celle-ci vers l'intérieur radialement et reliée à la section de bague interne (40), dans lequel la section de bague interne (40) est réalisée de préférence de façon cylindrique.

3. Corps de roue selon la revendication 1 ou 2, **caractérisé en ce que** la section de bague interne (40) est reliée directement à la section formant entretoise porteuse (20).

4. Corps de roue selon l'une des revendications 1 à 3, **caractérisé en ce que** la section de bague externe (18), la section formant entretoise porteuse (20) et la section de bague interne (40) ou la section de bague externe (18), la section formant entretoise porteuse (20), la section de bague interne (40) et la section de bague de support (42) délimitent une cavité annulaire du corps de roue (10).

5. Corps de roue selon l'une des revendications 1 à 4, **caractérisé en ce que** le corps de roue est fabriqué à partir de plusieurs composants distincts, de préférence par soudage de composants métalliques reliés ensemble, notamment de pièces en acier (18, 20, 40, 42 ; 18, 20a, 20b, 40, 42), dans lequel les composants métalliques distincts comprennent de préférence au moins une bague externe (18) formant la section de bague externe et au moins une entretoise porteuse (20 ; 20a, 20b) formant la section formant entretoise porteuse.

6. Corps de roue selon la revendication 6, **caractérisé en ce que** les composants métalliques distincts comprennent au moins une bague interne (40) formant la section de bague interne et, de préférence, au moins une bague de support (42) formant la section de bague de support.

7. Procédé de fabrication pour fabriquer un corps de roue à partir de plusieurs composants métalliques (18, 20, 40, 42 ; 18, 20a, 20b, 40, 42), dans lequel le corps de roue (10) prévu, par exemple, pour l'utilisation comme jante pour un pneu à bandage comprend :
- une section de bague externe cylindrique (18), s'étendant de façon coaxiale à un axe de corps de roue, qui présente sur un côté externe radial, une surface de roulement ou une surface porteuse pour porter un pneu, notamment un pneu à bandage (12) ;
- une section formant entretoise porteuse (20) reliée à la section de bague externe (18), s'étendant de la section de bague externe vers l'intérieur radialement, par laquelle la section de bague externe peut être reliée à une fixation de roue (22) ; et
- un dispositif de support (40, 42) reliant la section de bague externe (18) avec au moins un côté axial de la section formant entretoise porteuse (20) ; lequel présente une section de bague interne (40) s'étendant de façon coaxiale à l'axe de corps de roue radialement à l'intérieur de la section de bague externe (18), qui est reliée, d'une part, directement ou indirectement à distance radiale de la section de bague externe (18) à la section formant entretoise porteuse (20) et, d'autre part, directement ou indirectement à distance axiale de la section formant entretoise porteuse (20) à un côté interne radial de la section de bague externe (18) ;
dans lequel le procédé de fabrication est **caractérisé par** les étapes de procédé suivantes :
a) mise à disposition d'une bague externe (18) formant la section de bague externe dans le corps de roue terminé
b) mise à disposition d'un ensemble soudé (20, 40, 42 ; 20a, 20b, 40, 42) présentant la section formant entretoise porteuse (20) et la section de bague interne (40) ;
c) introduction de l'ensemble soudé dans la bague externe ; et
d) soudage de l'ensemble soudé sur sa circonférence externe à un côté interne radial de la bague externe (18).

8. Procédé selon la revendication 7, **caractérisé en ce que** l'ensemble soudé (20, 40, 42 ; 20a, 20b, 40, 42) est soudé, sur au moins une section de sa circonférence externe, au côté interne radial de la bague externe (18), ce par quoi au moins la section formant entretoise porteuse (20) est reliée à la bague externe (18).

9. Procédé selon la revendication 8 ou 9, **caractérisé en ce que** l'ensemble soudé (20, 40, 42 ; 20a, 20b, 40, 42) présente une section de bague de support (42) distante axialement de la section formant entretoise porteuse (20), qui s'étend de la section de bague interne (40) vers l'extérieur radialement et est soudée au côté interne radial de la bague externe (18).

10. Procédé selon l'une des revendications 7 à 9, **caractérisé en ce que** l'ensemble soudé est fabriqué par soudage de plusieurs composants métalliques, qui comprennent au moins une entretoise porteuse (20 ; 20a, 20b) formant la section formant entretoise porteuse et qui comprennent au moins une bague interne (40) formant la section de bague interne ou / et au moins une bague de support (42) formant la section de bague de support.

11. Procédé selon la revendication 10, **caractérisé en ce que** les composants métalliques (20, 40, 42 ; 20a, 20b, 40, 42) devant être soudés ensemble pour fabriquer l'ensemble soudé, sont amenés dans leurs positions prescrites relatives et sont fixés les uns aux autres et sont ensuite soudés, dans lequel la fixation a lieu de préférence par liaison ponctuelle au moyen de points de soudure.

12. Procédé selon la revendication 11, **caractérisé en ce que** la bague externe (18) est utilisée comme dispositif auxiliaire de positionnement ou de fixation.

13. Corps de roue (10) selon l'une des revendications 1 à 6, fabriqué avec le procédé selon l'une des revendications 7 à 12.

14. Roue de roulement pour un chariot de manutention, un véhicule commercial ou un dispositif mobile au moyen d'au moins une roue de roulement, comprenant un corps de roue (10) selon l'une des revendications 1 à 6 et 13, dans lequel la roue de roulement est dotée de préférence d'un pneu à bandage (12) sur la surface porteuse.

15. Dispositif mobile avec une roue de roulement selon la revendication 14, par exemple, un chariot de manutention ou d'une manière générale, un véhicule commercial.
